# EUROPÄISCHE PATENTSCHRIFT

(11) **EP 2 735 349 B1**
(45) Veröffentlichungstag und Bekanntmachung des Hinweises auf die Patenterteilung: **01.01.2020**
(21) Anmeldenummer: 12193966.4
(22) Anmeldetag: 23.11.2012
(51) Int. Cl.: B01D 21/24, E03F 5/16

(54) **Abscheideanlage mit Anschlussstutzen zum Anpassen des Abwasserniveaus**
Separation system with connecting nozzle for adjusting the waste water level
Installation de séparation avec tubulure de connexion pour ajuster le niveau des eaux usées

(43) Veröffentlichungstag der Anmeldung: 28.05.2014
(60) Teilanmeldung: 19202129.3
(73) Patentinhaber: Kessel AG, 85101 Lenting (DE)
(72) Erfinder: Kessel, Bernhard, 85101 Lenting (DE)
(74) Vertreter: Grünecker Patent- und Rechtsanwälte PartG mbB

(56) Entgegenhaltungen:
- WO-A1-2005/061071
- DE-A1- 2 150 019
- DE-A1- 2 500 085
- DE-A1- 3 014 204
- DE-U1- 7 812 310

## Beschreibung

Die Erfindung betrifft eine Abscheideanlage gemäß dem Oberbegriff des Anspruchs 1.

Derartige Abscheideanlagen werden beispielsweise in Gebäude-Abwassersysteme integriert und säubern das Abwasser weitestgehend von darin befindlichen organischen und/oder anorganischen Bestandteilen. Es existieren unter anderem Fettabscheider zum Abscheiden von Fetten und Ölen, Leichtflüssigkeitsabscheider zum Abscheiden von Öl und Benzin, Sinkstoffabscheider zum Abscheiden von zu Boden sinkenden Rückständen sowie Stärkeabscheider zum Abscheiden organischer Stärke. Diese Abscheideanlagen arbeiten meist nach dem Prinzip der durch die Schwerkraft bedingten Phasentrennung.

Die DE 296 01 495 U1 offenbart eine gattungsgemäße Abscheideanlage. Diese Abscheideanlage weist einen Abscheidebehälter mit einer als Zulauf ausgebildeten Öffnung und einer als Auslauf ausgebildeten Öffnung auf. An der Zulauföffnung ist ein Zulaufrohr angeschweißt und an der Auslauföffnung ist ein Auslaufrohr angeschweißt. Die Zulauföffnung bestimmt einen Zulaufpegel, das heißt eine Höhe, von der aus das Abwasser in den Abscheidebehälter einfließt. Das Zulaufrohr weist den gleichen Zulaufpegel auf. Die Auslauföffnung bestimmt einen Auslaufpegel, das heißt eine Höhe, in der das Abwasser aus dem Abscheidebehälter herausfließt. Das Auslaufrohr weist den gleichen Auslaufpegel auf. Der Abscheidebehälter weist ein natürliches Gefälle auf, das heißt die Zulauföffnung liegt höher als die Ablauföffnung.

Derartige bekannte Abscheidebehälter werden bereits in der Produktion vorkonfiguriert. In Abhängigkeit von der bestehenden Abwasserverrohrung eines Gebäudes, in welchem die Abscheideanlage später zum Einsatz kommen soll, werden die unterschiedlich hohen Öffnungen für den Zulauf bzw. den Auslauf bereits vor der Auslieferung links- oder rechtsseitig in den Abscheidebehälter eingebracht.

Diese vorkonfigurierten Abscheideanlagen werden einbaufertig an den Bestimmungsort geliefert. Die Anordnung der dortigen Abwasserverrohrung bestimmt dabei, auf welcher Seite des Behälters sich Zulauf und Auslauf befinden müssen, um diesen korrekt anschließen zu können. Hierbei kommt es gelegentlich vor, dass eine angelieferte Abscheideanlage nicht zu der vor Ort bestehenden Abwasserverrohrung kompatibel ist, das heißt der Zulauf und der Auslauf sind an dem gelieferten Abscheidebehälter an der falschen Seite angeordnet.

Ein Abscheidebehälter, der die Anschlüsse für den Zulauf beziehungsweise den Auslauf auf der falschen Seite aufweist, kann möglicherweise am Einbauort gedreht werden. Ein Abscheidebehälter weist jedoch in der Regel zusätzliche Aggregate sowie Bedienelemente auf, die auf einer Vorderseite des Behälters angebracht sind. Somit kann eine vorkonfigurierte Anlage nicht immer in gedrehter Position verbaut werden.

Alternativ dazu kann in einem solchen Fall die bestehende Abwasserverrohrung an die Zulaufbeziehungsweise Auslaufseite des Behälters angepasst werden. Dies ist jedoch mit einem hohen Aufwand verbunden.

Die Druckschrift DE 21 50 019 A1 offenbart weiteren Stand der Technik. Sie zeigt einen Seifenabscheider, in dessen gegenüberliegenden Seitenwänden jeweils ein Rohrfutter eingebracht ist. Das Rohrfutter hat eine Aufnahmeöffnung, in die ein Rohr eingebracht ist. Die Aufnahmeöffnung ist exzentrisch im Rohrfutter angeordnet und kann durch Drehen des Rohrfutters in der Höhe verändert werden.

Die Druckschrift DE 78 12 310 U1 offenbart einen Leichtflüssigkeitsabscheider, bei dem ein Exzenterrohrstück zwischen einer Überfallrinne und einem Ablaufstutzen angeordnet ist. Die Druckschriften WO2005/061071 A1, DE 25 00 085 A1 und DE 30 14 204 A1 zeigen weiteren Stand der Technik.

Der vorliegenden Erfindung liegt die Aufgabe zugrunde, eine Abscheideanlage der eingangs genannten Art dahingehend zu verbessern, dass diese zwar vor Ort an die jeweiligen Gegebenheiten anpassbar ist, aber die Montage dennoch einfach durchführbar und die Anlage gleichzeitig einfach herstellbar ist.

Diese Aufgabe wird erfindungsgemäß durch eine Abscheideanlage mit den Merkmalen des Anspruchs 1 gelöst.

Da mindestens ein Anschluss-Stutzen an einer Öffnung des Abscheidebehälters in einer bestimmten Stellung anbringbar ist, in der sich dessen Abwasserniveau zu dem Abwasserniveau des an der anderen Öffnung angebrachten Anschluss-Stutzens unterscheidet, kann die Höhe der Abwasserpegel der beiden Anschluss-Stutzen relativ zueinander eingestellt werden. So kann vor Ort eine Zulaufseite und eine Auslaufseite bestimmt werden, wodurch die Anlage auf einfache Weise an die vorhandene Abwasserverrohrung angepasst werden kann. Außerdem kann der Hersteller seine Anlagen so ohne hohen Konfigurationsaufwand produzieren. Die erste Öffnung und die zweite Öffnung weisen Positioniermittel auf, welche die Anbringung eines Anschluss-Stutzens an der jeweiligen Öffnung in jeweils einer Orientierung bestimmen, in der das Abwasserniveau dieses Anschluss-Stutzens an beiden Öffnungen etwa gleich ist. Damit stellen die Positioniermittel sicher, dass die Orientierung des Anschluss-Stutzens sowohl bei Anbringung an der ersten Öffnung, als auch an der zweiten Öffnung etwa gleich bleibt. Ein als Zulauf gedachter Anschluss-Stutzen bildet somit sowohl bei Anbringung an der ersten als auch bei Anbringung an der zweiten Öffnung stets einen Zulauf, was eine einfache Handhabung bei der Montage der Anlage sicherstellt.

Es wird vorgeschlagen, dass ein Anschluss-Stutzen einen ersten Bereich zum Anschließen an eine der beiden Öffnungen des Abscheidebehälters aufweist, und der Anschluss-Stutzen einen zweiten Bereich zum Anschließen von Abwasser führenden Leitungen aufweist, wobei sich der Durchmesser des ersten Anschlussbereichs von dem Durchmesser des zweiten Anschlussbereichs unterscheidet. Aufgrund dieser unterschiedlichen Durchmesser kann ein Versatz in dem Anschluss-Stutzen realisiert werden, der eine gute und dennoch einfache Möglichkeit zur Ausbildung unterschiedlicher Abwasserniveaus innerhalb eines jeweiligen Anschluss-Stutzens gewährt.

Es ist vorstellbar, dass die erste Öffnung des Abscheidebehälters etwa auf dem gleichen Überlaufniveau wie die zweite Öffnung des Abscheidebehälters angeordnet ist. Zwischen den beiden Öffnungen besteht somit nahezu kein vorkonfiguriertes Gefälle, so dass die Auswahl einer Zulauf- und einer Auslaufseite vor Ort getroffen werden kann. Außerdem gewährleistet eine auf etwa gleicher Höhe vorgesehene Positionierung der Öffnungen, dass bereits kleine Änderungen der Stellung der Anschluss-Stutzen ausreichen, um entweder einen gewünschten Zulauf oder Auslauf zu bilden.

Die erste Öffnung kann beispielsweise Positioniermittel aufweisen, welche die Anbringung eines Anschluss-Stutzens an der ersten Öffnung in einer bestimmten Position ermöglichen. Der Anschluss-Stutzen kann somit einfach und sicher in der bestimmten Position an dem Abscheidebehälter angebracht werden, welche für den gewünschten Zulauf beziehungsweise Auslauf an der ersten Öffnung gewünscht ist.

Darüber hinaus kann zum Beispiel die zweite Öffnung Positioniermittel aufweisen, welche die Anbringung eines Anschluss-Stutzens an der zweiten Öffnung in einer bestimmten Position ermöglichen. Der Anschluss-Stutzen kann somit einfach und sicher in der bestimmten Position an dem Abscheidebehälter angebracht werden, welche für den gewünschten Zulauf beziehungsweise Auslauf an der zweiten Öffnung gewünscht ist.

Beispielsweise kann ein Anschluss-Stutzen in verschiedenen Stellungen an einer Öffnung anbringbar sein, wobei der Anschluss-Stutzen in den jeweiligen Stellungen voneinander verschiedene Abwasserniveaus bestimmt. So ist der Anschluss-Stutzen variabel nutzbar und genau ausrichtbar, was es erleichtert, den Anschluss-Stutzen an die am Einbauort individuell vorherrschenden Bedingungen anzupassen.

Es ist denkbar, dass in mindestens einer dieser verschiedenen Stellungen das Abwasserniveau dieses Anschluss-Stutzens oberhalb des Überlaufniveaus der zugehörigen Öffnung liegt, und in mindestens einer weiteren dieser verschiedenen Stellungen das Abwasserniveau dieses Anschluss-Stutzens unterhalb des Überlaufniveaus der zugehörigen Öffnung liegt. So wird es auf einfache Weise ermöglicht, dass ein Anschluss-Stutzen an der ersten bzw. an der zweiten Öffnung wahlweise einen Zulauf oder einen Auslauf bildet.

Es ist vorstellbar, dass in mindestens einer dieser verschiedenen Stellungen das Abwasserniveau des Anschluss-Stutzens etwa dem Überfaufniveau der zugehörigen Öffnung entspricht. Diese eine Stellung ermöglicht es, ein Ein- bzw. Austaufniveau gleich zu halten, wodurch ein möglichst gleichmäßiges Ein- beziehungsweise Ausströmen des Abwassers in den beziehungsweise aus dem Abscheidebehälter sichergestellt wird.

Möglicherweise kann in mindestens einer dieser verschiedenen Stellungen das Abwasserniveau dieses Anschluss-Stutzens oberhalb des Abwasserniveaus des an der anderen Öffnung angebrachten Anschluss-Stutzens liegen, und in mindestens einer weiteren dieser verschiedenen Stellungen das Abwasserniveau dieses Anschluss-Stutzens unterhalb des Abwasserniveaus des an der anderen Öffnung angebrachten Anschluss-Stutzens liegen. Die Änderung der Stellung eines Anschluss-Stutzens relativ zu dem anderen Anschluss-Stutzen stellt eine einfache Möglichkeit zur wahlweisen Bildung eines Zulaufs bzw. eines Auslaufs dar.

Außerdem können die Anschluss-Stutzen variabel positionierbar, insbesondere stufenlos drehbar, an der ersten Öffnung bzw. an der zweiten Öffnung anbringbar sein. So können die gewünschten Abwasserniveaus der jeweiligen Anschluss-Stutzen auf einfache Weise relativ zueinander eingestellt werden.

Die erste und/oder die zweite Öffnung können mit einem Abwasserberuhigungsbauwerk versehen sein. Diese Abwasserberuhigung ermöglicht eine Absetzphase von möglicherweise noch in dem Abwasser befindlichen Bestandteilen. So wird sichergestellt, dass das Abwasser sowohl zulaufseitig, als auch auslaufseitig beruhigt wird. Insbesondere auslaufseitig beugt eine Beruhigung des Abwassers einer Verschmutzung oder Verstopfung des dortigen Anschluss-Stutzens vor.

Es ist denkbar, dass zwischen jeweils einer Öffnung und einem Anschluss-Stutzen eine Dichtung, insbesondere ein keilförmiger Dichtring, vorgesehen ist. So kann sichergestellt werden, dass die an den jeweiligen Öffnungen angebrachten Anschluss-Stutzen dicht mit dem Abscheidebehälter verbunden sind.

Es ist vorstellbar, dass der Abscheidebehälter unterhalb der ersten und/oder unterhalb der zweiten Öffnung eine etwa glattflächige Schräge aufweist, wobei diese Schräge an einem bodennahen Ende ein Sammelbecken aufweist. Insbesondere in einem Fettabscheider befinden sich häufig Speisereste (Nassmüll) in dem Abwasser. Daher sammelt sich vor allem im Bereich eines Zulaufs vermehrt zu Boden sinkender Nassmüll an. Eine glattflächige Schräge bewirkt, dass diese Speisereste schwerkraftbedingt an dieser Schräge hinunterrutschen und sich in dem Sammelbecken sammeln. Von dort können die Speisereste problemlos aus der Anlage entnommen werden. Da die Zulaufseite bei der erfindungsgemäßen Abscheideanlage vor Ort gewählt werden kann, ist die etwa glattflächige Schräge mit Sammelbecken beidseitig, das heißt im Bereich beider Öffnungen vorhanden.

Es ist denkbar, dass der Abscheidebehälter auf dessen Oberseite mindestens eine abdeckbare Revisionsöffnung aufweist, welche im Bereich der ersten Öffnung und/oder im Bereich der zweiten Öffnung angeordnet ist und von diesem Bereich zur Mitte der Oberseite des Abscheidebehälters hin schräg nach oben verlaufend angeordnet ist. Unabhängig davon, ob die erste oder die zweite Öffnung des Abscheidebehälters, aufgrund der Anordnung der Anschluss-Stutzen als Zulauf oder Auslauf dienen, ermöglichen die schräg angeordneten Revisionsöffnungen auf beiden Seiten stets eine gute Einsichtnahme in den Abscheidebehälter.

Eine mögliche Ausführungsform der Erfindung wird anhand der Zeichnungen erläutert. Es zeigen:
- Figur 1: eine Perspektivdarstellung einer erfindungsgemäßen Abscheideanlage, dargestellt in einem montagebereiten Zustand,
- Figur 2: eine teilweise Explosionsdarstellung einer erfindungsgemäßen Abscheideanlage in Perspektivansicht,
- Figur 3: eine Schnittdarstellung entlang einer Ebene III-III der in Figur 1 abgebildeten Abscheideanlage,
- Figur 4: eine perspektivische Seitenansicht eines Abscheidebehälters,
- Figur 5: eine Schnittdarstellung eines ersten Anschluss-Stutzens, und
- Figur 6: eine Schnittdarstellung eines zweiten Anschluss-Stutzens.

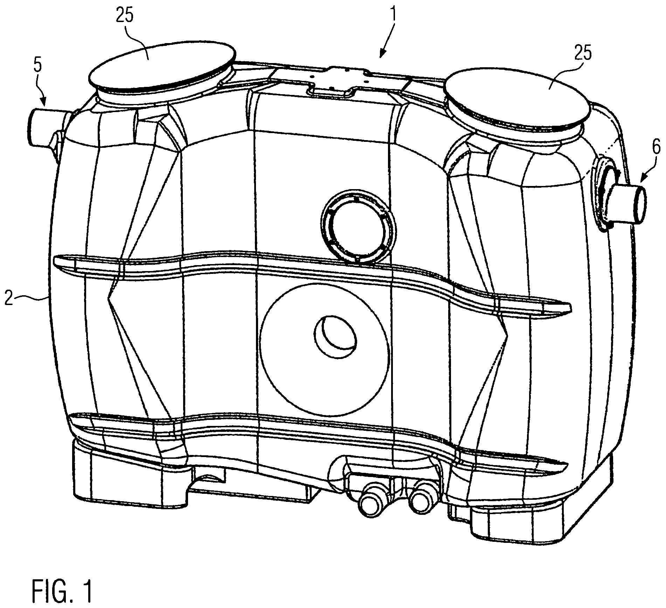

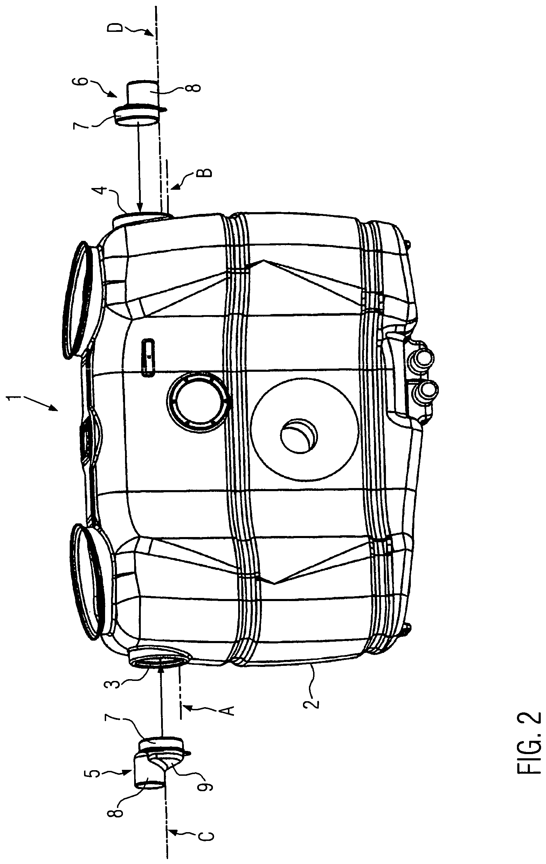

Die Figuren 1 und 2 zeigen eine Abscheideanlage 1 mit einem Abscheidebehälter 2, wobei die Abscheideanlage 1 in vorliegendem Beispiel als eine Fettabscheideanlage ausgeführt ist. Der Abscheidebehälter 2 weist eine etwa länglich ovale Form auf. Der Abscheidebehälter 2 weist außerdem eine erste Öffnung 3 und eine zweite Öffnung 4 auf.

Die erste Öffnung 3 befindet sich hier auf einer linken Seite des Abscheidebehälters 2. Die zweite Öffnung 4 befindet sich auf einer rechten Seite des Abscheidebehälters 2 Die Anordnung der ersten bzw. zweiten Öffnung 3, 4 an dem Abscheidebehälter 2 ist jedoch frei wählbar, das heißt die erste Öffnung 3 beziehungsweise die zweite Öffnung 4 könnten zum Beispiel auch an der jeweils anderen Seite des Abscheidebehälters 2 angeordnet sein.

Der ersten und der zweiten Öffnung 3, 4 ist jeweils ein Anschluss-Stutzen zugeordnet. In dem vorliegenden Beispiel ist der ersten Öffnung 3 ein erster Anschluss-Stutzen 5 zugeordnet. Der zweiten Öffnung 4 ist ein zweiter Anschluss-Stutzen 6 zugeordnet. Die Anschluss-Stutzen 5, 6 weisen hier unterschiedliche Formen auf. Es ist jedoch auch vorstellbar, dass die Anschluss-Stutzen 5, 6 die gleiche Form aufweisen. Beide Anschluss-Stutzen können sowohl in der ersten Öffnung 3, als auch in der zweiten Öffnung 4 angebracht werden.

Generell wird der Abscheideanlage 1 zu reinigendes Abwasser von außen über die im Gebäude installierte Abwasserverrohrung zugeführt. Das Abwasser kann sowohl durch die erste Öffnung 3, als auch durch die zweite Öffnung 4 in den Abscheidebehälter 2 hineinfließen.

Nachdem das Abwasser zumindest teilweise in der Abscheideanlage 1 gereinigt wurde, läuft dieses zumindest teilweise gereinigte Abwasser durch die jeweils andere der beiden Öffnungen 3, 4 aus dem Abscheidebehälter 2 hinaus.

Das Abwasser kann an beiden Öffnungen 3, 4 also sowohl in den Abscheidebehälter 2 einlaufen, als auch aus diesem auslaufen. Dabei tritt das Abwasser über eine Kante der jeweiligen Öffnung 3, 4 über. Somit weist die erste Öffnung 3 ein erstes Überlaufniveau A auf, und die zweite Öffnung 4 weist ein zweites Überlaufniveau B auf.

Die Abwasser führenden Leitungen eines Gebäudes werden über die Anschluss-Stutzen 5, 6 an die Abscheideanlage 1 angeschlossen. Das Abwasser fließt somit in einer bestimmten Höhe durch die Anschluss-Stutzen 5, 6. Einer der beiden Anschluss-Stutzen, hier der erste Anschluss-Stutzen 5, weist also ein erstes Abwasserniveau C auf. Der andere Anschluss-Stutzen, hier der zweite Anschluss-Stutzen 6, weist ein zweites Abwasserniveau D auf.

In der dargestellten beispielhaften Ausführungsform ist der erste Anschluss-Stutzen 5 an der ersten Öffnung 3 in einer Stellung angeordnet, in welcher sich sein Abwasserniveau C auf einer von dem Abwasserniveau D des zweiten Anschluss-Stutzens 6 unterschiedlichen Höhe befindet. Das Abwasserniveau C des ersten Anschluss-Stutzens 5 liegt in diesem Fall höher als das Abwasserniveau D des zweiten Anschluss-Stutzens 6.

Außerdem unterscheidet sich das Abwasserniveau C des ersten Anschluss-Stutzens 5 von dem Überlaufniveau A der ersten Öffnung 3. Somit besteht in der vorliegenden beispielhaften Ausführungsform ein natürliches Gefälle von der mit dem ersten Anschluss-Stutzen 5 versehenen ersten Öffnung 3 zu der mit dem zweiten Anschluss-Stutzen 6 versehenen zweiten Öffnung 4. Die erste Öffnung 3 bildet somit einen Zulauf zu dem Abscheidebehälter 2, und die zweite Öffnung 4 bildet einen Auslauf aus dem Abscheidebehälter 2.

In Figur 2 ist zu sehen, dass die Anschluss-Stutzen 5, 6 zwei unterschiedliche Bereiche 7, 8 aufweisen. Der erste Bereich 7 dient zum Anschließen der Anschluss-Stutzen 5, 6 an die Öffnungen 3, 4 des Abscheidebehälters 2. Der zweite Bereich 8 der Anschluss-Stutzen 5, 6 dient zum Anschließen von Abwasser führenden Leitungen.

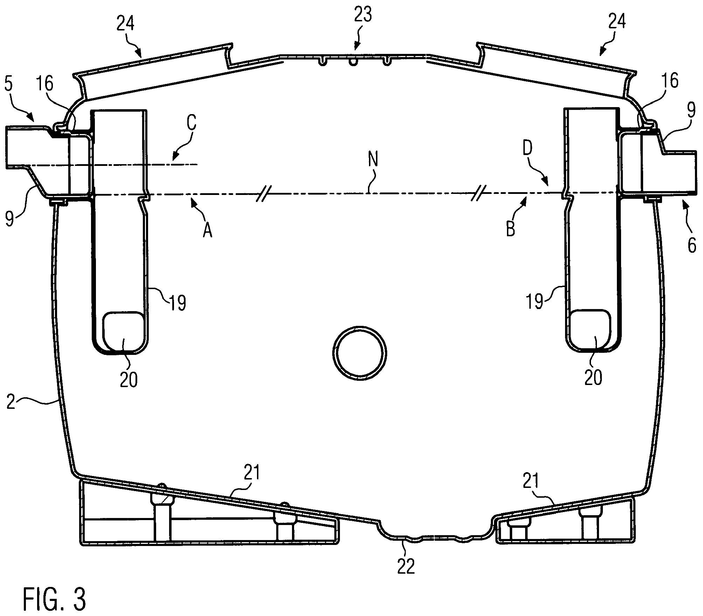

Der Durchmesser des ersten Bereichs 7 der Anschluss-Stutzen 5, 6 entspricht etwa dem Durchmesser der ersten Öffnung 3 bzw. der zweiten Öffnung 4. Der Durchmesser des zweiten Bereichs 8 der Anschluss-Stutzen 5, 6 unterscheidet sich von dem Durchmesser des ersten Bereichs 7 der Anschluss-Stutzen 5, 6. Der Versatz zwischen den beiden unterschiedlichen Durchmessern der beiden Bereiche 7, 8 wird über einen Absatz 9 (siehe Figur 3) überbrückt.

Da die Bereiche 7, 8 der Anschluss-Stutzen nicht kreisrund sein müssen, sondern verschiedene Formen aufweisen können, ist im vorliegenden Fall unter dem Begriff "Durchmesser" der lichte Abstand zwischen zwei sich gegenüberliegenden Punkten innerhalb des Abwasser führenden Durchlasspfades zu verstehen.

In Figur 3 ist mit der Linie N dargestellt, dass die Überlaufniveaus A, B der ersten beziehungsweise der zweiten Öffnung 3, 4 etwa auf gleicher Höhe angeordnet sind. Die Positionierung der Anschluss-Stutzen 5, 6 an der ersten bzw. zweiten Öffnung 3, 4 kann die Abwasserniveaus C, D festlegen und somit eine Zulaufseite und eine Auslaufseite bestimmen. Eine aufwendige Vorkonfiguration einer Zulauföffnung und einer höher liegenden Auslauföffnung während der Produktion kann somit entfallen.

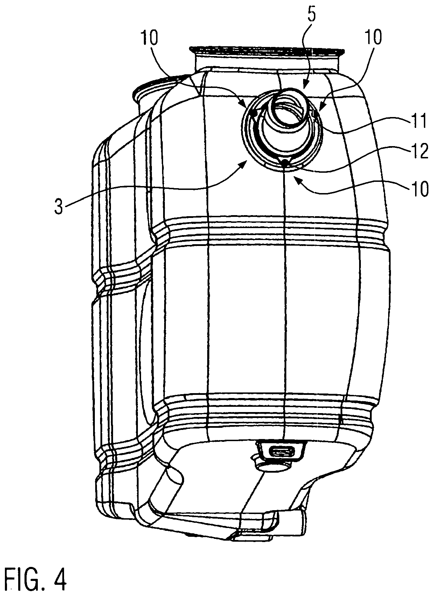

Um eine bestimmte Stellung eines Anschluss-Stutzens 5, 6 festzulegen, weist die Abscheideanlage 1 Positioniermittel 10 auf. In Figur 4 sind diese Positioniermittel 10 als eine Schraubverbindung zwischen der ersten Öffnung 3 und dem ersten Anschluss-Stutzen 5 ausgeführt. Der erste Anschluss-Stutzen 5 weist drei nach außen abstehende Laschen 11 auf. Jede dieser Laschen 11 besitzt eine Bohrung, durch welche eine Schraube 12 geführt werden kann.

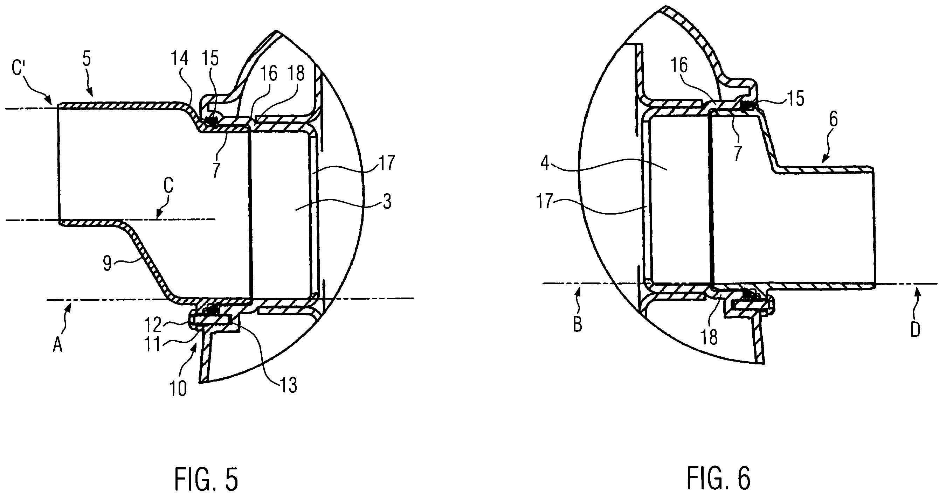

In den Figuren 5 und 6 ist jeweils eine Lasche 11 und eine Schraube 12 in einer vergrößerten Schnittdarstellung abgebildet. Am Umfang einer Öffnung 3, 4 ist eine Bohrung 13 vorgesehen in welche die Schraube 12 eingeschraubt werden kann.

Figur 4 zeigt, dass die Positioniermittel 10 in einem bestimmten Muster angeordnet sind. In vorliegendem Fall sind die Positioniermittel symmetrisch mit gleichen Abständen an dem Anschluss-Stutzen 5 bzw. der Öffnung 3 angeordnet. Der Anschluss-Stutzen 5 kann somit in drei unterschiedlichen Stellungen an der Öffnung 3 angebracht werden.

Die Positioniermittel 10 können auch asymmetrisch, das heißt mit unterschiedlichen Abständen zueinander an dem Anschluss-Stutzen 5 bzw. der Öffnung 3 angeordnet sein. In diesem Fall kann der Anschluss-Stutzen 5 nur in einer bestimmten Stellung an der Öffnung 3 angebracht werden.

Als geeignete Positioniermittel (10) wären beispielsweise auch Einkerbungen, Führungsstifte, Bolzen, Anschläge oder andere bekannte Elemente vorstellbar.

In der vorliegenden beispielhaften Ausführungsform weisen der zweite Anschluss-Stutzen 6 sowie die zweite Öffnung 4 ebenfalls Positioniermittel 10 auf. Die Positioniermittel 10 der beiden Anschluss-Stutzen 5, 6 und der beiden Öffnungen 3, 4 können zueinander kompatibel sein. Das heißt, die Anschluss-Stutzen 5, 6 können sowohl an der ersten Öffnung 3, als auch an der zweiten Öffnung 4 angeordnet werden. Dabei können die Positioniermittel 10 eine bestimmte Stellung der Anschluss-Stutzen 5, 6 an der jeweiligen Öffnung 3, 4 festlegen.

Die Positioniermittel 10 können in einer vorteilhaften Ausführungsform derart ausgestaltet sein, dass die Abwasserniveaus C, D der jeweiligen Anschluss-Stutzen 5, 6 sowohl bei Anordnung an der ersten Öffnung 3, als auch bei Anordnung an der zweiten Öffnung 4 gleich bleiben. So kann bei einem Seitenwechsel der beiden Anschluss-Stutzen 5, 6 die Zulaufseite und die Auslaufseite der Abscheideanlage 1 vertauscht werden. Durch die beidseitig zueinander kompatiblen Positioniermittel 10 kann sichergestellt werden, dass der Anwender die beiden Anschluss-Stutzen 5, 6 bei einem Seitenwechsel stets in der hierfür vorgesehenen Stellung an dem Abscheidebehälter 2 anbringt.

Ein Anschluss-Stutzen 5, 6 kann auch in verschiedenen Stellungen an einer Öffnung 3, 4 anbringbar sein. In den jeweiligen voneinander unterschiedlichen Stellungen der einzelnen Anschluss-Stutzen 5, 6 kann sich deren Abwasserniveau C, D entsprechend zueinander ändern.

In dem in Figur 5 abgebildeten Ausführungsbeispiel ist der erste Anschluss-Stutzen 5 in einer Stellung an der ersten Öffnung 3 angeordnet, in welcher das Abwasserniveau C des Anschluss-Stutzens 5 oberhalb des Überlaufniveaus A der Öffnung 3 liegt. Sofern das Abwasserniveau D des gegenüberliegend angeordneten Anschluss-Stutzens 6 dabei ebenfalls unterhalb des Abwasserniveaus C liegt, bildet der Anschluss-Stutzen 5 bei dieser Konfiguration eine Zulaufseite an der Öffnung 3, und der Anschluss-Stutzen 6 bildet eine Auslaufseite an der Öffnung 4.

In einer anderen, hier nicht dargestellten Stellung, wäre es vorstellbar, dass der Anschluss-Stutzen 5 beispielsweise um 180° gedreht in der Öffnung 3 angeordnet ist. Ein Absatz 14 würde sich somit auf der unteren, das heißt auf der bodennahen Seite der Öffnung 3 befinden, und der Anschluss-Stutzen 5 würde demgemäß ein Abwasserniveau C' definieren, welches unterhalb des Überlaufniveaus A der Öffnung 3 läge. Sofern das Abwasserniveau C' dabei ebenfalls unterhalb des Abwasserniveaus D des gegenüberliegend angeordneten Anschluss-Stutzens 6 liegt, bildet der Anschluss-Stutzen 5 bei dieser Konfiguration eine Auslaufseite an der Öffnung 3, und der Anschluss-Stutzen 6 bildet eine Einlaufseite an der Öffnung 4.

Figur 6 zeigt eine weitere Ausführungsform. Hier ist der Anschluss-Stutzen 6 an der Öffnung 4 in einer Stellung angebracht, in der das Abwasserniveau D des Anschluss-Stutzens 5 etwa dem Überlaufniveau B der Öffnung 4 entspricht. Aufgrund der Möglichkeit zur variablen Positionierbarkeit der Anschluss-Stutzen 5, 6 könnte auch über eine Ausrichtung des Anschluss-Stutzens 6 relativ zu dem Anschluss-Stutzen 5 eine Einlauf- beziehungsweise Auslaufseite bestimmt werden.

Eine variable Positionierbarkeit der beiden Anschluss-Stutzen 5, 6 in den jeweiligen Öffnungen 3, 4 könnte beispielsweise durch eine Drehbarkeit, und insbesondere durch eine stufenlose Drehbarkeit der Anschluss-Stutzen 5, 6 in den Öffnungen 3, 4 erreicht werden.

Um bei einer Drehbarkeit die Dichtigkeit zwischen den Anschluss-Stutzen 5, 6 und den Öffnungen 3, 4 zu gewährleisten, befindet sich zwischen den Anschluss-Stutzen 5, 6 und den jeweiligen Öffnungen 3, 4 eine Dichtung 15. In den Figuren 5 und 6 ist diese Dichtung 15 als ein umlaufender, keilförmiger Dichtring ausgebildet.

Es ist außerdem zu erkennen, dass die Öffnungen 3, 4 einen zum Innenraum des Abscheidebehälters 2 verlaufenden Kragen 16 aufweisen. Der Kragen 16 weist eine Öffnung 17 auf, durch welche das Abwasser in den Abscheidebehälter 2 hineinfließen bzw. aus dem Abscheidebehälter 2 herausfließen kann. Der Kragen 16 weist außerdem einen umlaufenden Flansch 18 auf, an welchem der erste Bereich 7 der Anschluss-Stutzen 5, 6 angebracht werden kann.

Figur 3 zeigt, dass an einem Kragen 16 ein Beruhigungsbauwerk 19 vorgesehen sein kann. In dem hier abgebildeten Ausführungsbeispiel läuft das Abwasser über den Anschluss-Stutzen 5 in den Abscheidebehälter 2 ein. Dabei passiert das Abwasser die Öffnung 17 des Kragens 16 und strömt in den Innenraum des Beruhigungsbauwerks 19 ein. Das Abwasser verlässt den Innenraum des Beruhigungsbauwerks 19 durch die Öffnung 20 in den Innenraum des Abscheidebehälters 2.

Auf der anderen Seite strömt das in dem Abscheidebehälter 2 zumindest teilweise gereinigte Abwasser über den Anschluss-Stutzen 6 aus dem Abscheidebehälter 2 heraus. Zuvor tritt das Abwasser durch die Öffnung 20 in den Innenraum des mit dem Kragen 16 der zweiten Öffnung 4 verbundenen Beruhigungsbauwerks 19 ein.

Da die Zulaufseite bzw. die Auslaufseite des Abscheidebehälters 2 anhand der Stellung mindestens eines Anschluss-Stutzens 5, 6 bestimmt werden kann, sind die Beruhigungsbauwerke 19 sowohl als Einlaufbauwerk als auch als Auslaufbauwerk nutzbar. Sie sind daher vorteilhafterweise spiegelsymmetrisch zueinander ausgestaltet.

In Figur 3 ist außerdem zu erkennen, dass der Abscheidebehälter 2 unterhalb der ersten und unterhalb der zweiten Öffnung 3, 4 eine etwa glattflächige Schräge 21 aufweist. Da vor allem bei Fettabscheidern häufig Speisereste in dem zu reinigenden Abwasser enthalten sind, ist insbesondere zulaufseitig mit einem erhöhten Anteil von Speiseresten (Nassmüll) zu rechnen. Dieser Nassmüll sinkt innerhalb des Abscheidebehälters zu Boden. An der glattflächigen Schräge 21 gleitet dieser Nassmüll in ein Sammelbecken 22 ab. Aus diesem Sammelbecken 22 kann der Nassmüll einfach herausgeholt und entsorgt werden, ohne den laufenden Betrieb der Abscheideanlage 1 merklich zu beinträchtigen.

Da in der erfindungsgemäßen Abscheideanlage 1 die Stellung mindestens eines Anschluss-Stutzens 5, 6 eine mit erhöhtem Nassmüllanteil beaufschlagte Zulaufseite bestimmen kann, ist die glattflächige Schräge 21 vorteilhafterweise sowohl unterhalb der ersten Öffnung 3, als auch unterhalb der zweiten Öffnung 4 vorhanden, da beide Öffnungen 3, 4 eine Zulaufseite bilden können.

Der Abscheidebehälter 2 weist auf dessen Oberseite 23 im Bereich der ersten Öffnung 3, bzw. im Bereich der zweiten Öffnung 4 eine Revisionsöffnung 24 auf. Diese Revisionsöffnung 24 kann mit einem Deckel 25 (siehe Figur 1) abdeckbar sein. Die Revisionsöffnungen 24 sind von dem Bereich der Öffnungen 3, 4 zur Mitte der Oberseite 23 des Abscheidebehälters 2 hin schräg nach oben verlaufend angeordnet, um eine gute Einsichtnahme in den Abscheidebehälter 2 zu ermöglichen.

Es ist bekannt, dass Revisionsöffnungen in Abscheideanlagen insbesondere im Bereich des Auslaufs notwendig sind, da der Auslauf durch möglicherweise noch im Abwasser befindliche Bestandteile gelegentlich verstopfen kann, was durch eine Zugänglichkeit durch eine im Bereich des Auslaufs angeordnete Revisionsöffnung gut behoben werden kann.

Da eine Auslaufseite der erfindungsgemäßen Abscheideanlage 1 durch die Stellung mindestens eines der Anschluss-Stutzen 5, 6 sowohl an der ersten, als auch an der zweiten Öffnung 3, 4 bestimmt werden kann, ist es vorteilhaft, eine derartige Revisionsöffnung 24 im Bereich der ersten Öffnung 3 und/oder im Bereich der zweiten Öffnung 4 anzuordnen.

Das folgende Beispiel soll die Vorteile der erfindungsgemäßen Abscheideanlage 1 praxisnah zusammenfassen. Bei der Herstellung des Abscheidebehälters 2 können die Öffnungen 3, 4 auf gleicher Höhe angebracht sein. An einer der beiden Öffnungen 3, 4 kann ein Anschluss-Stutzen 5, 6 bereits bei Auslieferung angeordnet sein.

Welche der beiden Öffnungen 3, 4 die Zulaufseite bzw. die Ablaufseite der Abscheideanlage 1 bildet, kann individuell und abhängig von den Einbaugegebenheiten anhand der Stellung mindestens eines Anschluss-Stutzens 5, 6 vor Ort bestimmt werden. Möchte der Anwender beispielsweise den Anschluss-Stutzen 5 zulaufseitig verwenden, so bringt er diesen in einer Stellung an der jeweiligen Öffnung 3, 4 an, in welcher dessen Abwasserniveau C oberhalb des Abwasserniveaus D des möglicherweise bei Auslieferung bereits angeordneten Anschluss-Stutzens 6 liegt. Das Abwasser fließt so von dem höher liegenden Abwasserniveau C zu dem darunter liegenden Abwasserniveau D.

Möchte der Anwender diesen Anschluss-Stutzen 5 auslaufseitig nutzen, so bringt er diesen in einer Stellung an der jeweiligen Öffnung 3, 4 an, in welcher dessen Abwasserniveau C unterhalb des Abwasserniveaus D des möglicherweise bei Auslieferung bereits angeordneten Anschluss-Stutzens 6 liegt. So fließt das Abwasser von dem höher liegenden Abwasserniveau D zu dem darunter liegenden Abwasserniveau C.

In einer anderen Ausführungsform kann der Anwender durch Vertauschen der beiden, jeweils unterschiedliche Wasserniveaus C, D aufweisenden Anschluss-Stutzen 5, 6 an den Öffnungen 3, 4 eine Zulaufseite bzw. eine Auslaufseite nach Bedarf festlegen.

## Patentansprüche

1. Abscheideanlage (1), insbesondere Fettabscheideanlage, mit Anschluss-Stutzen (5, 6) und einem Abscheidebehälter (2), der eine erste und eine zweite Öffnung (3, 4) aufweist, welchen jeweils ein Anschluss-Stutzen (5, 6) zugeordnet ist, wobei
die erste Öffnung (3) ein erstes Überlaufniveau (A) aufweist und die zweite Öffnung (4) ein zweites Überlaufniveau (B) aufweist, und
einer der beiden Anschluss-Stutzen (5, 6), bei Anbringung des Anschluss-Stutzens an eine Öffnung, durch seine Orientierung ein erstes Abwasserniveau (C, D) definiert und der andere der beiden Anschluss-Stutzen (5, 6), bei Anbringung des Anschluss-Stutzens an die andere Öffnung, durch seine Orientierung ein zweites Abwasserniveau (C, D) definiert, wobei ein Anschluss-Stutzen (5, 6) an eine der beiden Öffnungen (3, 4) in einer Stellung anbringbar ist, in welcher sich sein Abwasserniveau (C, D) auf einer von dem Abwasserniveau (C, D) des an der anderen Öffnung (3, 4) angebrachten Anschluss-Stutzens (5, 6) unterschiedlichen Höhe befindet, und
sich das Abwasserniveau (C, D) dieses einen Stutzens (5, 6) von dem Überlaufniveau (A, B) derjenigen Öffnung (3, 4), an welcher dieser Stutzen (5, 6) angebracht ist, unterscheidet,
**dadurch gekennzeichnet,**
**dass** die erste Öffnung (3) und die zweite Öffnung (4) Positioniermittel (10) aufweisen, welche die Anbringung eines Anschluss-Stutzens (5, 6) an der jeweiligen Öffnung (3, 4) in jeweils einer Orientierung bestimmen, in der das Abwasserniveau (C, D) des Anschluss-Stutzens (5, 6) an beiden Öffnungen (3, 4) etwa gleich ist.

2. Abscheideanlage (1) nach Anspruch 1,
**dadurch gekennzeichnet,**
**dass** ein Anschluss-Stutzen (5, 6) einen ersten Bereich (7) zum Anschließen an eine der beiden Öffnungen (3, 4) des Abscheidebehälters (2) aufweist, und der Anschluss-Stutzen (5, 6) einen zweiten Bereich (8) zum Anschließen von Abwasser führenden Leitungen aufweist, wobei sich der Durchmesser des ersten Anschlussbereichs (7) von dem Durchmesser des zweiten Anschlussbereichs (8) unterscheidet.

3. Abscheideanlage (1) nach Anspruch 1 oder 2,
**dadurch gekennzeichnet,**
**dass** die erste Öffnung (3) des Abscheidebehälters (2) etwa auf dem gleichen Überlaufniveau (A, B) wie die zweite Öffnung (4) des Abscheidebehälters (2) angeordnet ist.

4. Abscheideanlage (1) nach einem der vorhergehenden Ansprüche, **dadurch gekennzeichnet,**
**dass** ein Anschluss-Stutzen (5, 6) in verschiedenen Stellungen an einer Öffnung (3, 4) anbringbar ist, wobei der Anschluss-Stutzen (5, 6) in den jeweiligen Stellungen voneinander verschiedene Abwasserniveaus (C, D) bestimmt.

5. Abscheideanlage (1) nach Anspruch 4, **dadurch gekennzeichnet,**
**dass** in mindestens einer dieser verschiedenen Stellungen das Abwasserniveau (C, D) dieses Anschluss-Stutzens (5, 6) oberhalb des Überlaufniveaus (A, B) der zugehörigen Öffnung (3, 4) liegt, und in mindestens einer weiteren dieser verschiedenen Stellungen das Abwasserniveau (C, D) dieses Anschluss-Stutzens (5, 6) unterhalb des Überlaufniveaus (A, B) der zugehörigen Öffnung (3, 4) liegt.

6. Abscheideanlage (1) nach Anspruch 4, **dadurch gekennzeichnet,**
**dass** in mindestens einer dieser verschiedenen Stellungen das Abwasserniveau (C, D) des Anschluss-Stutzens (5, 6) etwa dem Überlaufniveau (A, B) der zugehörigen Öffnung (3, 4) entspricht.

7. Abscheideanlage (1) nach mindestens einem der Ansprüche 4 bis 6, **dadurch gekennzeichnet,**
**dass** in mindestens einer dieser verschiedenen Stellungen das Abwasserniveau (C, D) dieses Anschluss-Stutzens (5, 6) oberhalb des Abwasserniveaus (C, D) des an der anderen Öffnung (3, 4) angebrachten Anschluss-Stutzens (5, 6) liegt, und in mindestens einer weiteren dieser verschiedenen Stellungen das Abwasserniveau (C, D) dieses Anschluss-Stutzens (5, 6) unterhalb des Abwasserniveaus (C, D) des an der anderen Öffnung (3, 4) angebrachten Anschluss-Stutzens (5, 6) liegt.

8. Abscheideanlage (1) nach mindestens einem der vorhergehenden Ansprüche, **dadurch gekennzeichnet,**
**dass** die Anschluss-Stutzen (5, 6) variabel positionierbar, insbesondere stufenlos drehbar, an der ersten Öffnung (3) beziehungsweise an der zweiten Öffnung (4) anbringbar sind.

9. Abscheideanlage (1) nach einem der vorhergehenden Ansprüche, **dadurch gekennzeichnet,**
**dass** die erste und/oder die zweite Öffnung (3, 4) mit einem Abwasserberuhigungsbauwerk (19) versehen ist.

10. Abscheideanlage (1) nach einem der vorhergehenden Ansprüche, **dadurch gekennzeichnet,**
**dass** eine Dichtung (15), insbesondere ein keilförmiger Dichtring, zwischen jeweils einer Öffnung (3, 4) und einem Anschluss-Stutzen (5, 6) vorgesehen ist.

11. Abscheideanlage (1) nach einem der vorhergehenden Ansprüche, **dadurch gekennzeichnet,**
**dass** der Abscheidebehälter (2) unterhalb der ersten und/oder unterhalb der zweiten Öffnung (3, 4) eine etwa glattflächige Schräge (21) aufweist, wobei diese Schräge (21) an einem bodennahen Ende ein Sammelbecken (22) aufweist.

12. Abscheideanlage (1) nach einem der vorhergehenden Ansprüche, **dadurch gekennzeichnet,**
**dass** der Abscheidebehälter (2) auf dessen Oberseite (23) mindestens eine abdeckbare Revisionsöffnung (24) aufweist, welche im Bereich der ersten Öffnung (3) und/oder im Bereich der zweiten Öffnung (4) angeordnet ist und von diesem Bereich zur Mitte der Oberseite (23) des Abscheidebehälters (2) hin schräg nach oben verlaufend angeordnet ist.

## Claims

1. Separation system (1), in particular grease separation system, comprising connecting nozzles (5, 6) and a separation container (2),
which has a first and a second opening (3, 4), to each of which a connecting nozzle (5, 6) is assigned, wherein
the first opening (3) has a first overflow level (A) and the second opening (4) has a second overflow level (B), and
one of the two connecting nozzles (5, 6) defines a first waste water level (C, D) due to its orientation when the connecting nozzle is attached to an opening and the other of the two connecting nozzles (5, 6) defines a second waste water level (C, D) due to its orientation when the connecting nozzle is attached to the other opening,
wherein a connecting nozzle (5, 6) can be attached to one of the two openings (3, 4) in a position in which its waste-water level (C, D) is at a height which is different from the waste-water level (C, D) of the connecting nozzle (5, 6) attached to the other opening (3, 4), and
the waste water level (C, D) of said one nozzle (5, 6) differs from the overflow level (A, B) of the opening (3, 4) to which said nozzle (5, 6) is attached,
**characterized in**
**that** the first opening (3) and the second opening (4) comprise positioning means (10) which determine the attachment of a connecting nozzle (5, 6) to the respective opening (3, 4) in a respective orientation in which the waste water level (C, D) of the connecting nozzle (5, 6) is approximately the same at both openings (3, 4).

2. Separation system according to claim 1,
**characterized in**
**that** a connecting nozzle (5, 6) comprises a first region (7) for connection to one of the two openings (3, 4) of the separation container (2), and the connecting nozzle (5, 6) comprises a second region (8) for connecting lines carrying waste water, the diameter of the first connection region (7) being different from the diameter of the second connection region (8).

3. Separation system (1) according to claim 1 or 2,
**characterized in**
**that** the first opening (3) of the separation container (2) is arranged approximately at the same overflow level (A, B) as the second opening (4) of the separation container (2).

4. Separation system (1) according to one of the preceding claims,
**characterized in**
**that** a connecting nozzle (5, 6) can be attached to an opening (3, 4) in different positions, the connecting nozzle (5, 6) determining waste water levels (C, D) which differ from one another in the respective positions.

5. Separation system (1) according to claim 4,
**characterized in**
**that**, in at least one of said different positions, the waste water level (C, D) of said connecting nozzle (5, 6) is above the overflow level (A, B) of the associated opening (3, 4), and, in at least one further position of said different positions, the waste water level (C, D) of said connecting nozzle (5, 6) is below the overflow level (A, B) of the associated opening (3, 4).

6. Separation system (1) according to claim 4,
**characterized in**
**that**, in at least one of said different positions, the waste water level (C, D) of the connecting nozzle (5, 6) corresponds approximately to the overflow level (A, B) of the associated opening (3, 4).

7. Separation system (1) according to at least one of claims 4 to 6,
**characterized in**
**that**, in at least one of said different positions, the waste water level (C, D) of said connecting nozzle (5, 6) is above the waste water level (C, D) of the connecting nozzle (5, 6) attached to the other opening (3, 4), and, in at least one further position of said different positions, the waste water level (C, D) of said connecting nozzle (5, 6) is below the waste water level (C, D) of the connecting nozzle (5, 6) attached to the other opening (3, 4).

8. Separation system (1) according to at least one of the preceding claims,
**characterized in**
**that** the connecting nozzles (5, 6) can be positioned variably, in particular rotated continuously, attached to the first opening (3) or to the second opening (4).

9. Separation system (1) according to one of the preceding clams,
**characterized in**
**that** the first and/or the second opening (3, 4) is provided with a waste-water calming structure (19).

10. Separation system (1) according to one of the preceding claims,
**characterized in**
**that** a seal (15), in particular a wedge-shaped sealing ring, is provided between a respective opening (3, 4) and a connecting nozzle (5, 6).

11. Separation system (1) according to one of the preceding claims,
**characterized in**
**that** the separation container (2) has an approximately smooth-surface bevel (21) below the first and/or below the second opening (3, 4), said bevel (21) comprising a collecting basin (22) at an end close to the bottom.

12. Separation system (1) according to one of the preceding claims,
**characterized in**
**that** the separation container (2) comprises on its upper side (23) at least one coverable inspection opening (24) which is arranged in the region of the first opening (3) and/or in the region of the second opening (4) and is arranged to extend from said region obliquely upwards towards the center of the upper side (23) of the separation container (2).

## Revendications

1. Installation de séparation (1), notamment séparateur de graisses, comprenant des embouts de raccordement (5, 6) et un réservoir de séparation (2), qui présente une première et une deuxième ouverture (3, 4) auxquelles est affecté respectivement un embout de raccordement (5, 6), installation
dans laquelle la première ouverture (3) présente un premier niveau de trop-plein (A) et la deuxième ouverture (4) un deuxième niveau de trop-plein (B), et l'un des deux embouts de raccordement (5, 6) définit par son orientation, lorsque l'embout de raccordement est placé dans une ouverture, un premier niveau d'eaux usées (CD), et l'autre des deux embouts de raccordement (5, 6) définit par son orientation, lorsque l'embout de raccordement est placé dans l'autre ouverture, un deuxième niveau d'eaux usées (C, D), et
dans laquelle un embout de raccordement (5, 6) peut être placé dans l'une des deux ouvertures (3, 4), dans une position dans laquelle un niveau d'eaux usées (C, D) se trouve à une hauteur différente d'un niveau d'eaux usées (C, D) de l'embout de raccordement (5, 6) placé dans l'autre ouverture (3, 4), et le niveau d'eaux usées (C, D) de cet embout (5, 6) étant différent du niveau de trop-plein (A, B) de ladite ouverture (3, 4) dans laquelle est placé cet embout (5, 6),
**caractérisée**
**en ce que** la première ouverture (3) et la deuxième ouverture (4) présentent des moyens de positionnement (10), qui déterminent le placement d'un embout de raccordement (5, 6) dans ladite une ouverture respective (3, 4) selon une orientation respective dans laquelle le niveau d'eaux usées (C, D) de l'embout de raccordement (5, 6) est sensiblement identique pour les deux ouvertures (3, 4).

2. Installation de séparation (1) selon la revendication 1,
**caractérisée en ce qu'**un embout de raccordement (5, 6) présente une première zone (7) pour le raccordement à l'une des deux ouvertures (3, 4) du réservoir de séparation (2), et l'embout de raccordement (5, 6) présente une deuxième zone (8) pour le raccordement de conduites véhiculant des eaux usées, le diamètre de la première zone de raccordement (7) étant différent du diamètre de la deuxième zone de raccordement (8).

3. Installation de séparation (1) selon la revendication 1 ou la revendication 2,
**caractérisée en ce que** la première ouverture (3) du réservoir de séparation (2) est agencée sensiblement au même niveau de trop-plein (A, B) que la deuxième ouverture (4) du réservoir de séparation (2).

4. Installation de séparation (1) selon l'une des revendications précédentes,
**caractérisée en ce qu'**un embout de raccordement (5, 6) peut être placé selon différentes positions dans une ouverture (3, 4), l'embout de raccordement (5, 6) déterminant différents niveaux d'eaux usées (C, D) dans lesdites positions respectivement considérées.

5. Installation de séparation (1) selon la revendication 4,
**caractérisée en ce que** dans l'une au moins de ces différentes positions, le niveau d'eaux usées (C, D) de cet embout de raccordement (5, 6) se situe au-dessus du niveau de trop-plein (A, B) de l'ouverture (3, 4) associée, et dans au moins une autre de ces différentes positions, le niveau d'eaux usées (C, D) de cet embout de raccordement (5, 6) se situe en-dessous du niveau de trop-plein (A, B) de l'ouverture (3, 4) associée.

6. Installation de séparation (1) selon la revendication 4,
**caractérisée en ce que** dans l'une au moins de ces différentes positions, le niveau d'eaux usées (C, D) de l'embout de raccordement (5, 6) correspond sensiblement au niveau de trop-plein (A, B) de l'ouverture (3, 4) associée.

7. Installation de séparation (1) selon l'une au moins des revendications 4 à 6,
**caractérisée en ce que** dans l'une au moins de ces différentes positions, le niveau d'eaux usées (C, D) de cet embout de raccordement (5, 6) se situe au-dessus du niveau d'eaux usées (C, D) de l'embout de raccordement (5, 6) placé dans l'autre ouverture (3, 4), et dans au moins une autre de ces différentes positions, le niveau d'eaux usées (C, D) de cet embout de raccordement (5, 6) se situe en-dessous du niveau d'eaux usées (C, D) de l'embout de raccordement (5, 6) placé dans l'autre ouverture (3, 4).

8. Installation de séparation (1) selon l'une au moins des revendications précédentes,
**caractérisée en ce que** les embouts de raccordement (5, 6) peuvent être placés selon un positionnement variable, notamment en pouvant être tournés de manière continue, dans la première ouverture (3) ou respectivement la deuxième ouverture (4).

9. Installation de séparation (1) selon l'une des revendications précédentes,
**caractérisée en ce que** la première et/ou la deuxième ouverture (3, 4) est et/ou sont pourvues d'un ensemble de tranquillisation d'eaux usées (19).

10. Installation de séparation (1) selon l'une des revendications précédentes,
**caractérisée en ce qu'**il est prévu un joint d'étanchéité (15), notamment un anneau d'étanchéité en forme de coin, entre respectivement une ouverture (3, 4) et un embout de raccordement (5, 6).

11. Installation de séparation (1) selon l'une des revendications précédentes,
**caractérisée en ce que** le réservoir de séparation (2) présente en-dessous de la première et/ou en-dessous de la deuxième ouverture (3, 4), une rampe inclinée (21) sensiblement plane et lisse, cette rampe inclinée (21) comportant à une extrémité proche du fond, un bac de collecte (22).

12. Installation de séparation (1) selon l'une des revendications précédentes,
**caractérisée en ce que** le réservoir de séparation (2) présente sur son côté supérieur (23), au moins une ouverture de révision (24) pouvant être recouverte, qui est agencée dans la zone de la première ouverture (3) et/ou dans la zone de la deuxième ouverture (4), et qui est agencée de façon à s'étendre de manière oblique vers le haut à partir de cette zone en direction du milieu du côté supérieur (23) du réservoir de séparation (2).
